# EUROPÄISCHE PATENTANMELDUNG

(11) **EP 0 846 581 A2**
(43) Veröffentlichungstag der Anmeldung: **10.06.1998**
(21) Anmeldenummer: 97121218.8
(22) Anmeldetag: 03.12.1997
(51) Int. Cl.: B60H 1/22

(54) **Verfahren zur Regelung der Abgaswerte bei einem Fahrzeugheizgerät**

(30) Priorität: 07.12.1996 DE 19650889
(71) Anmelder: WEBASTO THERMOSYSTEME GmbH, D-82131 Stockdorf (DE)
(72) Erfinder: Bittmann, Michael, 80999 München (DE); Widemann, Fritz, 81241 München (DE)
(74) Vertreter: Wiese, Gerhard

(57) **Zusammenfassung**

Die Erfindung betrifft ein Verfahren zur Regelung der Abgaswerte bei einem Fahrzeugheizgerät, dessen Brenner Brennstoff von einer Brennstoff-Fördereinrichtung und Brennluft von einem mittels eines Elektromotors (10) betätigbaren Brennluftgebläses (11) zugeführt wird. Die Leistung des Brennluftgebläses (11) ist von einem Steuergerät getaktet ansteuerbar. Erfindungsgemäß ist vorgesehen, daß im Abgasstrom des Brenners mittels eines Sensors die CO₂-Konzentration gemessen und durch Variierung der Leistung des Elektromotors auf einen für eine bestimmte Leistungsstufe optimalen Wert eingestellt wird. In einer anschließenden Ansteuer-Taktpause des Elektromotors wird dessen elektromotorische Kraft (EMK) gemessen und als für den eingestellten Idealwert charakteristische Größe in einem Datenspeicher des Steuergerätes festgehalten. Dadurch, daß ein Steuergerät die an einem optimalen Betriebspunkt (CO₂-Wert) erzeugte EMK eines ihm zugeordneten Gebläsemotors "lernt", werden Streuungen in der Motorleistung und in den Lagerreibwerten zuverlässig kompensiert.

## Beschreibung

Die Erfindung betrifft ein Verfahren zur Regelung der Abgaswerte bei einem Fahrzeugheizgerät, dessen Brenner Brennstoff von einer Brennstoff-Fördereinrichtung und Brennluft von einem mittels eines Elektromotors betätigbaren Brennluftgebläse zugeführt wird, wobei die Leistung des Brennluftgebläses von einem Steuergerät getaktet ansteuerbar ist.

Aus der DE 30 31 410 C2 ist ein Steuergerät für ein Fahrzeugheizgerät bekannt, mittels welchem die Drehzahl eines Brennluftgebläses regelbar ist. Ferner ist aus der EP 0 619 197 A2 ein motorunabhängiges Fahrzeugheizgerät bekannt, bei dem ein Steuergerät mit einem Korrekturwert zur nachträglichen Einstellung des Brennstoff-Luftverhältnisses programmierbar ist. Durch die bei Großserien relativ stark streuende Generatorspannung der verwendeten Gebläsemotoren und unterschiedlich große Reibungsverluste ist eine exakte Einstellung eines optimalen Brennstoff-Brennluft-Verhältnisses sehr aufwendig.

Der vorliegenden Erfindung liegt die Aufgabe zugrunde, ein Verfahren anzugeben, mittels dem in einfacher Weise eine zuverlässige Einstellung optimaler Abgaswerte ermöglicht wird.

Hierzu ist erfindungsgemäß vorgesehen, daß im Abgasstrom des Brenners mittels eines Sensors die CO₂-Konzentration gemessen wird und durch Variierung der Leistung des Elektromotors auf einen optimalen Wert eingestellt wird. Bei einem optionalen Wert wird in einer sich aufgrund der getakteten Ansteuerung ergebenden Ansteuerpause des Elektromotors dessen elektromotorische Kraft (EMK) gemessen und als charakteristische Größe in einem Datenspeicher des Steuergeräts festgehalten. Somit wird ein zu einem optimalen CO₂-Wert Datenspeicher des Steuergeräts festgehalten. Somit wird ein zu einem optimalen CO₂-Wert korrespondierender EMK-Wert im Steuergerät festgehalten. Dadurch sind Streuungen in der Motorenleistung und Unterschiede in den Lagerreibungen für jedes Heizgerät bereits am Endprüfstand eliminiert. Das Steuergerät 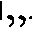 lernt 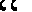 praktisch den fuhr den ihm zugeordneten Elektromotor für einen bestimmten Leistungsbereich des Fahrzeugheizgeräts charakteristischen EMK-Wert als charakteristische Steuergröße und verwendet diesen anschließend im Heizgerätebetrieb immer wieder zur Ansteuerung des betreffenden Leistungsbereiches.

Vorteilhafterweise wird bei einem in mehreren Leistungsstufen betreibbaren Fahrzeugheizgerät in jeder Leistungsstufe der optimale CO₂-Wert eingestellt und die bei diesem gemessene elektromotorische Kraft (EMK) jeweils in einem separaten Datenspeicher des Steuergeräts festgehalten.

Es ist ferner vorteilhaft, wenn gleichzeitig auch ein für die Temperatur des Fahrzeugheizgeräts charakteristischer Wert mit abgespeichert wird. Dies kann beispielsweise bei einem Luftheizgerät, bei dem Luft als Wärmeträgermedium dient, ein mittels eines ohnehin vorhandenen Temperatursensors gemessener Wert für die Heizluft-Ansaugtemperatur sein. Bei einem Wasserheizgerät könnte dies hingegen eine am Wärmetauscher gemessene Wassertemperatur sein.

Falls später im Betrieb die ermittelte Temperatur von der bei der Einstellung am Prüfstand herrschenden Temperatur abweicht, wird mittels einer im Steuergerät integrierten Rechenroutine ein temperaturabhängiger Ausgleichswert für die charakteristische elektromotorische Kraft (EMK) für den jeweiligen Leistungsbereich des Fahrzeugheizgerätes ermittelt. Ebenso ist das Auslesen eines temperaturabhängigen Ausgleichswertes aus einem Kennfeld möglich.

Nachfolgend ist ein Ausführungsbeispiel der Erfindung anhand der Zeichnungen beschrieben. Es zeigt:
- Fig. 1: einen schematischen Längsschnitt durch ein Luftheizgerät und

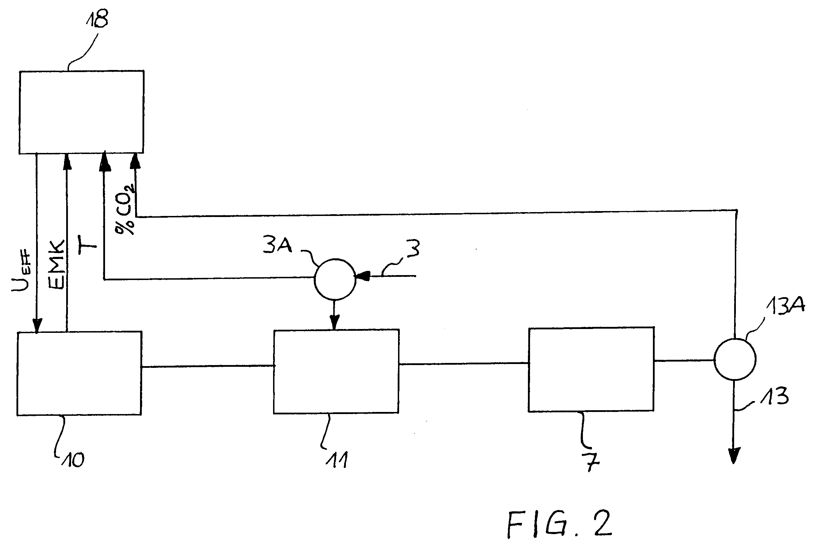

- Fig. 2: eine schematische Darstellung der Ein- und Ausgangswerte des Steuergeräts mit den daran beteiligten Komponenten.

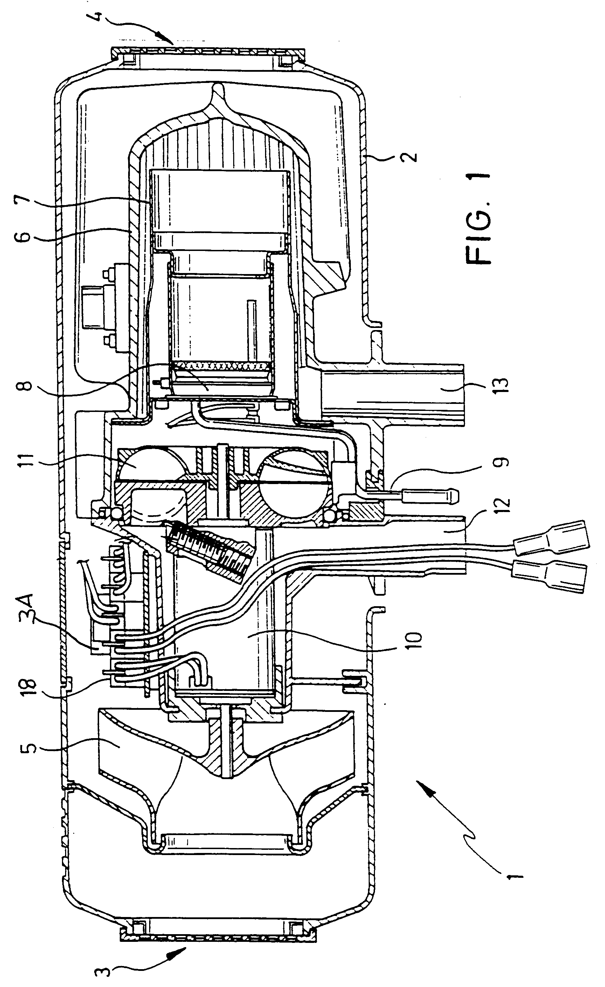

Ein in Fig. 1 insgesamt mit 1 bezeichnetes Fahrzeugheizgerät ist im vorliegenden Beispiel als Luftheizgerät dargestellt. Für die vorliegende Erfindung sind jedoch ebenso gut Fahrzeugheizgeräte geeignet, die in den Kühlwasserkreislauf eines Fahrzeugs eingeschaltet sind und in der Fachwelt als Wasserheizgeräte bezeichnet werden. Das Fahrzeugheizgerät 1 umfaßt ein Gehäuse 2 mit einer stirnseitigen Öffnung an einer Eintrittsseite 3 und einer stirnseitigen Öffnung an einer Austrittsseite 4. Innerhalb des Gehäuses 2 wird von der Eintrittsseite 3 zur Austrittsseite 4 mittels eines Heizluftgebläses 5 Heizluft über einen Wärmetauscher 6 zur Erwärmung eines nicht dargestellten Fahrzeuginnenraumes gefördert.

Die zur Erwärmung des Wärmetauschers 6 erforderliche Energie wird den von einem Brenner 8 in einer anschließenden Brennkammer 7 erzeugten heißen Brenngasen entzogen. Dem Brenner 8 wird Brennstoff von einer nicht dargestellten Brennstoff-Fördereinrichtung über eine Brennstoffleitung 9 sowie Brennluft mittels eines Brennluftgebläses 11 zugeführt. Das dabei entstehende Brennstoff-Luftgemisch wird mittels einer nicht näher dargestellten Zündeinrichtung gezündet und die entstehenden heißen Abgase verlassen nach Erwärmen des Wärmetauschers 6 über einen Abgasstutzen 13 das Fahrzeugheizgerät 1. Die vom Brennluftgebläse 11 geförderte Brennluft wird über einen Ansaugstutzen 12 angesaugt.

Das Brennluftgebläse 11 und das Heizluftgebläse 5 werden mittels eines Elektromotors 10 angetrieben. Die Leistung dieses Elektromotors 10 ist durch ein Steuergerät 18 steuerbar. Dabei wird vorzugsweise die dem Elektromotor 10 zugeführte Effektivspannung U_{EFF} bei einer konstanten von der Fahrzeugbatterie gelieferten Spannung U durch Variierung des Arbeitstakt-Pausen-Verhältnisses geregelt. In den sich bei der Ansteuerung des Elektromotors 10 ergebenden Taktpausen wird die vom Elektromotor 10, der dann als Generator wirkt, erzeugte elektromotorische Kraft (EMK) als Eingangssignal dem Steuergerät 18 zugeführt. Dem Steuergerät 18 wird ferner mittels eines im Bereich der über die Eintrittsseite 3 angesaugten Heizluft angeordneten Temperatursensors 3A ein Tempraturwert T zugeführt.

Nach einer Endmontage eines Fahrzeugheizgerätes wird am Endprüfstand im Bereich des Abgasstutzens 13 ein CO₂-Sensor 13A angeordnet, mittels dem der CO₂-Wert des Abgases ermittelt und als Signal dem Steuergerät 18 zugeführt. In einem bestimmten Leistungsbereich, beispielsweise Vollast- oder Teillaststufe, ist ein bestimmter CO₂-Wert für eine optimale Verbrennung charakteristisch. Dieser CO₂-Wert wird durch Veränderung des Taktverhältnisses, d.h. somit der Effektivspannung U_{EFF} am Steuergerät 18 so lange variiert, bis die vom Elektromotor 10 über das Brennluftgebläse 11 geförderte Brennluftmenge in Verbindung mit einer gleichzeitig konstanten Brennstoffmenge zu diesem optimalen CO₂-Wert führt. Ist dieser Idealzustand erreicht, so wird in einer der nächsten Taktpausen die vom Elektromotor 10 als Generator erzeugte elektromotorische Kraft EMK als Eingangssignal dem Steuergerät 18 zugeführt und dort als charakteristischer Wert in einem Speicher abgelegt.

Bei mehreren Leistungsstufen des Fahrzeugheizgerätes wird dieser Vorgang vorzugsweise für jede der Leistungsstufen wiederholt. Dabei wird jedesmal ein für einen bestimmten Leistungsbereich charakteristischer EMK-Wert abgespeichert. Dies gilt auch für eine stufenlose, kontinuierliche Heizleistungsregelung, bei der in kurzen Abständen charakteristische Werte abgespeichert werden.

Derart programmiert verläßt das Fahrzeugheizgerät das Herstellungswerk und wird bei einem Fahrzeughersteller oder einer Einbauwerkstatt in das Fahrzeug eines Endkunden eingebaut. Dort wird dann während eines Heizgerätebetriebes periodisch geprüft, ob die in Taktpausen des Elektromotors 10 ermittelte elektromotorische Kraft EMK auch der gerade gewählten Heizleistung entspricht. Hierbei wird auch die jeweilige Motortemperatur, zu der im gewählten Ausführungsbeispiel die mittels des Sensors 3A ermittelte Temperatur der Ansaugluft kortespondiert, mit berücksichtigt. Dabei wird ein bei der Einstellung am Endprüfstand im Werk bei der Ermittlung des charakteristischen EMK-Wertes gemessener Temperaturwert T mit dem momentan ermittelten Temperaturwert T verglichen und bei Abweichung der EMK-Wert des Elektromotors über eine Rechenroutine oder aus einem Kennfeld korrigiert. Weist bei der Messung während des Heizgerätebetriebes die gemessene Generatorspannung des Elektromotors 10 von dem bei der Einstellung am Endprüfstand für die jeweilige Leistungsstufe ermittelten EMK-Wert ab, so wird durch Variierung der Effektivspannung U_{EFF}, insbesondere durch Veränderung der Taktbreite die Luftfördermenge des Brennluftgebläses 11 so abgeändert, daß wieder Übereinstimmung erreicht wird.

Sollte während der Lebensdauer eines Fahrzeugheizgerätes ein Ersatz des Elektromotors, des Steuergeräts oder des Brennluftgebläses erforderlich sein, so wird eine zur Einstellung am Endprüfstand analoge Prüfroutine vorgenommen, sodaß das Steuergerät 18 wiederum den für den zugeordneten Elektromotor 10 charakteristischen EMK-Wert für einen bestimmten CO₂-Wert des Abgases 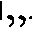 lernt 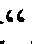

Als Meßintervalle für eine Messung der elektromotorischen Kraft sind etwa 2 bis 5 Sekunden vorgesehen. Der Abstand und die Dauer der Meßintervalle sind im Steuergerät 18 beispielsweise durch End-of-Line-Programmierung einstellbar. Die eigentliche Meßdauer liegt etwa bei 2 ms.

## Patentansprüche

1. Verfahren zur Regelung der Abgaswerte bei einem Fahrzeugheizgerät, dessen Brenner Brennstoff von einer Brennstoff-Fördereinrichtung und Brennluft von einem mittels eines Elektromotors betätigbaren Brennluftgebläse zugeführt wird, wobei die Leistung des Brennluftgebläses von einem Steuergerät getaktet ansteuerbar ist, **dadurch gekennzeichnet,** daß im Abgasstrom des Brenners mittels eines Sensors die CO₂-Konzentration gemessen und durch Variierung der Leistung des Elektromotors auf einen optimalen Wert eingestellt wird, worauf in einer anschließenden Ansteuerpause des Elektromotors dessen elektromotorische Kraft (EMK) gemessen und als charakteristische Größe in einem Datenspeicher des Steuergeräts festgehalten wird.

2. Verfahren nach Anspruch 1, **dadurch gekennzeichnet,** daß bei einem in mehreren Leistungsstufen betreibbaren Fahrzeugheizgerät in jeder Leistungsstufe der optimale CO₂-Wert eingestellt und die bei diesem gemessene elektromotorische Kraft (EMK) jeweils in einem separaten Datenspeicher des Steuergeräts festgehalten wird.

3. Verfahren nach Anspruch 1 oder 2, **dadurch gekennzeichnet,** daß eine charakteristische Temperatur (T) beim Abspeichern des EMK-Wertes mit im Steuergerät abgespeichert wird.

4. Verfahren nach einem der vorhergehenden Ansprüche, **dadurch gekennzeichnet,** daß die Messung des CO₂-Wertes und die Abspeicherung des zugeordneten EMK-Wertes an einem Prüfstand beim Hersteller des Fahrzeugheizgeräts oder einer Einbauwerkstatt erfolgt.

5. Verfahren nach einem der vorhergehenden Ansprüche, **dadurch gekennzeichnet,** daß im Betrieb des Fahrzeugheizgeräts in bestimmten Meßintervallen in Ansteuerpausen die elektromotorische Kraft des Elektromotors gemessen und mit dem abgespeicherten, für einen bestimmten Leistungsbereich charakteristischen EMK-Wert verglichen wird und daß bei Abweichungen das Steuergerät über eine Veränderung der dem Elektromotor zugeführten Effektivspannung U_{eff}, insbesondere über eine Veränderung der Taktbreite, die Abweichung ausregelt.

6. Verfahren nach einem der Ansprüche 3 bis 5, **dadurch gekennzeichnet,** daß im Betrieb des Fahrzeugheizgeräts bei einer Messung der EMK des Elektromotors auch ein für dessen Temperatur charakteristischer Temperaturwert T gemessen und mit dem bei der Einstellung am Prüfstand gemessenen Temperaturwert verglichen wird, und daß das Steuergerät bei Abweichungen mittels einer Rechenroutine oder durch Auslesen aus einem Kennfeld entsprechend der Temperaturabweichung den EMK-Wert korrigiert.
